# EUROPEAN PATENT SPECIFICATION

(11) **EP 4 344 525 B1**
(45) Date of publication and mention of the grant of the patent: **02.10.2024**
(21) Application number: 22197888.5
(22) Date of filing: 27.09.2022
(51) Int. Cl.: A01D 34/69, B60L 15/00, B62B 5/00

(54) **WALK-BEHIND HAND-GUIDED WORKING MACHINE**
HANDGEFÜHRTE ARBEITSMASCHINE
MACHINE DE TRAVAIL À CONDUCTEUR ACCOMPAGNANT ET À GUIDAGE MANUEL

(43) Date of publication of application: 03.04.2024
(73) Proprietor: Nanjing Chervon Industry Co., Ltd., Nanjing, Jiangsu 211106 (CN)
(72) Inventor: XIA, Yiwen, Nanjing, Jiangsu (CN); XU, Yanqing, Nanjing, Jiangsu (CN); REN, Yufei, Nanjing, Jiangsu (CN); XU, Haishen, Nanjing, Jiangsu (CN)
(74) Representative: Sun, Yiming

(56) References cited:
- EP-A1- 3 987 906
- EP-A1- 4 014 942
- DE-A1- 102011 114 337
- DE-A1- 102018 200 769
- US-A1- 2020 156 482

## Description

### TECHNICAL FIELD

The present disclosure relates to a walk-behind hand-guided working machine.

### BACKGROUND

A lawn mower is a machine that can be used for mowing a home lawn. Many types of lawn mowers exist and may be divided into a lawn mower robot, a lawn mower that relies on a thrust of a user to move forward or backward, and a power assisted lawn mower according to an assisted type. The power assisted lawn mower may also be referred to as a self-moving lawn mower.

In some related lawn mowers with a self-moving function, the self-moving function requires manual control by operating a speed knob, a constant speed is outputted, and a user needs to follow a lawn mower and perform a mowing operation. If a moving speed of the user is less than a moving speed of the lawn mower, the user may feel pulled by the lawn mower. If the moving speed of the user is greater than the moving speed of the lawn mower, the user may feel hindered by the lawn mower. To sum up, the comfort of the user during mowing is reduced.

In some related lawn mowers, a pressure sensor can sense a thrust of a user so as to control a moving speed of a lawn mower according to the thrust. However, the sensing accuracy and installation position of the pressure sensor and a cooperation state between the pressure sensor and other components in the lawn mower affect the accuracy of thrust detection, affecting the comfort of the user controlling the lawn mower to move.

A lawn mower can e.g. be found in EP3987906A1.

### SUMMARY

The invention is defined by the appended claims.

To solve the defects in the existing art, the present application provides a working machine that obtains a thrust or a pulling force of a user without the aid of a pressure sensor and then controls a moving state according to the thrust or the pulling force.

In one example, a walk-behind electric device includes a device body, a moving wheel connected to the device body, a moving motor configured to drive the moving wheel, a power interface connected to a power supply so as to supply power to the moving motor, and a control unit configured to identify, according to device parameters of the walk-behind electric device, an auxiliary operation that a user wants to perform on the walk-behind electric device. The auxiliary operation is at least partially positively correlated to at least one output parameter of the moving motor.

In one example, the power interface is configured to be detachably connected to a power supply device.

In one example, the power interface is configured to be connected to a battery pack capable of supplying power to a power tool.

In one example, the walk-behind electric device further includes a parameter detection unit configured to detect the device parameters of the walk-behind electric device. The device parameters include at least one of a moving parameter of the moving wheel, a working parameter of the moving motor, or an attitude parameter of the device body.

In one example, a parameter detection unit does not include a force detection device for directly detecting a force applied by the user to the walk-behind electric device.

In one example, the parameter detection unit does not include a strain gauge.

In one example, the auxiliary operation includes at least a magnitude and a direction of the force.

In one example, the at least one output parameter includes at least output torque of the moving motor.

In one example, a walk-behind electric device includes a device body, a moving wheel connected to the device body, a moving motor configured to drive the moving wheel, a parameter detection unit configured to detect device parameters of the walk-behind electric device, wherein the device parameters include at least one of a moving parameter of the moving wheel, a working parameter of the moving motor, or an attitude parameter of the device body, a power interface connected to a power supply so as to supply power to the moving motor, and a control unit configured to estimate a force applied to the walk-behind electric device according to the device parameters. The force is positively correlated to output torque of the moving motor.

In one example, the power interface is configured to be detachably connected to a power supply device.

In one example, the power interface is configured to be connected to a battery pack capable of supplying power to a power tool.

In one example, the control unit is configured to assist operation of the moving motor according to the device parameters.

In one example, the control unit is configured to control a rotational state of the moving motor according to a rate of change of the device parameters.

In one example, the parameter detection unit does not include a strain gauge.

In one example, a walk-behind electric device includes a device body, a moving wheel connected to the device body, a moving motor configured to drive the moving wheel, a parameter detection unit configured to detect device parameters of the walk-behind electric device, a power interface connected to a power supply so as to supply power to the moving motor, and a control unit configured to estimate a force applied to the walk-behind electric device according to the device parameters and control output torque of the moving motor according to the force. The device parameters include at least one of a moving parameter of the moving wheel, a working parameter of the moving motor, or an attitude parameter of the device body

In one example, a hand-guided working machine includes a main body, a moving assembly connected to the main body and including a moving wheel and a moving motor for driving the moving wheel, a functional assembly mounted on the main body and including at least a functional accessory and a functional motor for driving the functional accessory, a power interface configured to be connected to a power supply capable of supplying power to the hand-guided working machine, a handle device mounted on the main body and including at least a handle portion for a user to hold, a parameter detection unit configured to detect device parameters of the hand-guided working machine, and a control unit configured to control at least a rotational state of the moving motor. The device parameters include at least one of a moving parameter of the moving wheel, a working parameter of the moving motor, or an attitude parameter of the main body. The control unit is configured to estimate a force applied to the handle portion according to the device parameters and control output torque of the moving motor according to the force.

In one example, the parameter detection unit does not include a strain gauge.

In one example, the hand-guided working machine is a walk-behind lawn mower.

In one example, the hand-guided working machine is a walk-behind snow thrower.

In one example, an item transport device includes a device body, an item placement section connected to the device body and configured to consign goods, a moving wheel connected to the device body, a moving motor configured to drive the moving wheel, a parameter detection unit configured to detect device parameters of the item transport device, a power interface connected to a power supply so as to supply power to the moving motor, and a control unit configured to estimate a force applied to the item transport device according to the device parameters and control output torque of the moving motor according to the force. The device parameters include at least one of a moving parameter of the moving wheel, a working parameter of the moving motor, or an attitude parameter of the device body;

In one example, a tool storage device includes a box body formed with a storage space for storing at least one type of tool device, a connecting rod fixed on the box body and including at least a grip for a user to hold, a moving wheel mounted at a bottom of or on a side of the box body to support the box body, a moving motor configured to drive the moving wheel to move, a parameter detection unit configured to detect device parameters of the tool storage device, a power interface connected to a power supply so as to supply power to the moving motor, and a control unit configured to estimate a force applied to the tool storage device according to the device parameters and control output torque of the moving motor according to the force. The device parameters include at least one of a moving parameter of the moving wheel, a working parameter of the moving motor, or an attitude parameter of the device body;

In one example, a wheeled tool bracket includes a bracket body formed with a support portion configured to support a tool device, a moving wheel connected to the bracket body, a moving motor configured to drive the moving wheel, a parameter detection unit configured to detect device parameters of the wheeled tool bracket, a power interface connected to a power supply so as to supply power to the moving motor, and a control unit configured to estimate a force applied to the wheeled tool bracket according to the device parameters and control output torque of the moving motor according to the force. The device parameters include at least one of a moving parameter of the moving wheel, a working parameter of the moving motor, or an attitude parameter of the bracket body.

In one example, a wheeled power supply device includes a power supply body configured to output power, a moving wheel configured to support the power supply body, a moving motor configured to drive the moving wheel to move, a parameter detection unit configured to detect device parameters of the wheeled power supply device, a control unit configured to estimate a force applied to the wheeled power supply device according to the device parameters and control output torque of the moving motor according to the force. The device parameters include at least one of a moving parameter of the moving wheel, a working parameter of the moving motor, or an attitude parameter of the power supply body.

In one example, a wheeled wind power apparatus includes an apparatus body including at least a fan, a moving wheel mounted on the apparatus body, a moving motor configured to drive the moving wheel, a parameter detection unit configured to detect device parameters of the wheeled wind power apparatus, a power interface connected to a power supply so as to supply power to the moving motor, and a control unit configured to estimate a force applied to the wheeled wind power apparatus according to the device parameters and control output torque of the moving motor according to the force. The device parameters include at least one of a moving parameter of the moving wheel, a working parameter of the moving motor, or an attitude parameter of the apparatus body.

In one example, a wheeled multifunctional tool includes a tool body including an accessory mount configured to mount different functional accessories, a power portion disposed on the tool body or the different functional accessories and including a power motor for driving the different functional accessories, a moving assembly mounted onto the tool body and including at least a moving wheel supporting the tool body and a moving motor driving the moving wheel, a parameter detection unit configured to detect device parameters of the wheeled multifunctional tool, a power interface connected to a power supply so as to supply power to the moving motor, and a control unit configured to estimate a force applied to the wheeled multifunctional tool according to the device parameters and control output torque of the moving motor according to the force. The device parameters include at least one of a moving parameter of the moving wheel, a working parameter of the moving motor, or an attitude parameter of the tool body.

In one example, a power assisted farm device includes a device body, a handle device connected to the device body, an operation performing assembly mounted onto the device body and used for performing an agricultural operation, a moving wheel mounted under the device body to support the device body, a moving motor configured to drive the moving wheel, a parameter detection unit configured to detect device parameters of the power assisted farm device, a power interface connected to a power supply so as to supply power to the moving motor, and a control unit configured to estimate a force applied to the power assisted farm device according to the device parameters and control output torque of the moving motor according to the force. The device parameters include at least one of a moving parameter of the moving wheel, a working parameter of the moving motor, or an attitude parameter of the device body;

In one example, walk-behind working machine includes a main body including a moving assembly and a moving motor for driving the moving assembly, and a handle device connected to the main body. The handle device includes an operation piece including a grip for a user to hold. The walk-behind working machine further includes a parameter detection unit for acquiring a relevant parameter in a moving process of the walk-behind working machine and transmitting the relevant parameter to a control unit, and the control unit. The control unit is configured to acquire the relevant parameter and estimate a thrust or a pulling force applied by the user to the handle device according to the relevant parameter, and control a moving state of the walk-behind working machine according to the thrust or the pulling force.

In one example, the relevant parameter includes at least an electrical parameter of the moving motor.

In one example, the relevant parameter includes at least a moving parameter of the walk-behind working machine.

In one example, a force sensing device for sensing the thrust or the pulling force is not provided in the walk-behind working machine.

In one example, the parameter detection unit includes a current detection device for detecting a working current of the moving motor; an acceleration detection device for detecting acceleration of moving of the walk-behind working machine; an angle detection device for detecting an included angle between a plane where the walk-behind working machine is located and a horizontal plane.

In one example, the control unit is configured to acquire the working current, the acceleration and the included angle and calculate the thrust or the pulling force according to the working current, the acceleration and the included angle.

In one example, the control unit is configured to control output torque of the moving motor according to the thrust or the pulling force such that the moving motor outputs a desired driving force.

In one example, the thrust or the pulling force is positively correlated to the output torque.

In one example, the control unit is configured to control a motor rotational speed of the moving motor according to the thrust or the pulling force such that the moving motor outputs a desired rotational speed.

In one example, a power assisted working machine includes a main body including a moving assembly and a moving motor for driving the moving assembly, a handle device connected to the main body, a parameter detection unit for acquiring a relevant parameter in a moving process of the power assisted working machine and transmitting the relevant parameter to a control unit, and the control unit. The control unit is configured to acquire the relevant parameter and estimate a thrust or a pulling force applied by the user to the handle device according to the relevant parameter, and control a moving state of the power assisted working machine according to the thrust or the pulling force.

In one example, the relevant parameter includes at least an electrical parameter of the moving motor.

In one example, the relevant parameter includes at least a moving parameter of the power assisted working machine.

In one example, a parameter detection unit includes a current detection device for detecting a working current of the moving motor; an acceleration detection device for detecting acceleration of moving of a power assisted working machine; and an angle detection device for detecting an included angle between a plane where the power assisted working machine is located and a horizontal plane; wherein the control unit is electrically connected to at least the current detection device, the acceleration detection device and the angle detection device and configured to acquire the working current, the acceleration and the included angle and calculate the thrust or the pulling force applied by the user to the handle device according to the working current, the acceleration and the included angle.

In one example, the control unit is configured to control output torque of the moving motor according to the thrust or the pulling force such that the moving motor outputs a desired driving force.

In one example, the control unit is configured to control a rotational speed of the moving motor according to the thrust or the pulling force such that the moving motor outputs a desired rotational speed.

In one example, a sensing device for sensing the thrust or the pulling force is not provided in the power assisted working machine.

In one example, a lawn mower includes a main body including a moving assembly and a moving motor for driving the moving assembly, and a handle device connected to the main body. The handle device includes an operation piece including a grip for a user to hold. The lawn mower further includes a current detection device for detecting a working current of the moving motor, an acceleration detection device for detecting acceleration of moving of the lawn mower; and a control unit electrically connected to at least the current detection device and the acceleration detection device. The control unit is configured to acquire the working current and the acceleration, calculate a thrust or a pulling force applied by the user to the handle device according to the working current and the acceleration, and control a moving state of the lawn mower according to the thrust or the pulling force.

In one example, the control unit is configured to control output torque of the moving motor according to the thrust or the pulling force such that the moving motor outputs a desired driving force.

In one example, the control unit is configured to not acquire a motor rotational speed fed back by the moving motor.

In one example, the control unit is configured to control a motor rotational speed of the moving motor according to the thrust or the pulling force such that the moving motor outputs a desired rotational speed.

The beneficial effects of the present application are as follows: the thrust or the pulling force of the user can be calculated without the aid of the pressure sensor and only by parameters obtained by some detection elements of the machine, and then the moving state of the machine can be controlled based on the estimated force, thereby avoiding the case where control performance is unstable due to the inaccurate detection of the pressure sensor, causing poor comfort of the user's operation.

### BRIEF DESCRIPTION OF DRAWINGS

FIG. 1 is a structural view of a walk-behind electric device;
FIG. 2 is a diagram of a control circuit of a walk-behind electric device;
FIG. 3 is a structural view of a walk-behind lawn mower;
FIG. 4 is a sectional view of part of a handle device of a walk-behind lawn mower with a pressure sensor in a related art;
FIG. 5 is a control logic diagram of the walk-behind lawn mower in FIG. 3;
FIG. 6 is a schematic view of a working scenario of a walk-behind lawn mower according to an example of the present application;
FIG. 7 is a graph illustrating a variation curve of a motor speed when the speed is controlled according to a force applied by a user in the existing art;
FIG. 8 is a flowchart of a method for whole machine control of the walk-behind lawn mower in FIG. 3; and
FIG. 9 is a structural view of walk-behind electric devices of other types.

### DETAILED DESCRIPTION

The present application is described below in detail in conjunction with drawings and examples. It is to be understood that the specific examples set forth below are intended to illustrate and not to limit the present application. Additionally, it is to be noted that to facilitate description, only part, not all, of structures related to the present application are illustrated in the drawings.

In examples of the present application, many types of walk-behind power assisted electric devices exist, such as a walk-behindhand-pushing lawn mower, a snow thrower, a wheeled tool box, a wheeled cart or forklift, a wheeled power supply device, a wheeled blower or fan, and a bracket of a tool device, which are not listed here. In some example, the walk-behind electric device may be a walk-behind power assisted electric device. In this example, the walk-behind power assisted electric device may be understood as a device in which a user can manually push/pull a position such as a device body or a handle so that a power assisted apparatus in the device generates the assistance. The so-called assistance may be understood as the following: a device provides a force with a certain magnitude and direction to help the device to move; at the same time, the power assisted apparatus of the device may also adjust a magnitude and a direction of the assistance outputted by the power assisted apparatus according to the force applied by the user so that the comfort of the user is ensured. That is to say, the assistance provided by the power assisted apparatus in the device can change with the force applied by the user.

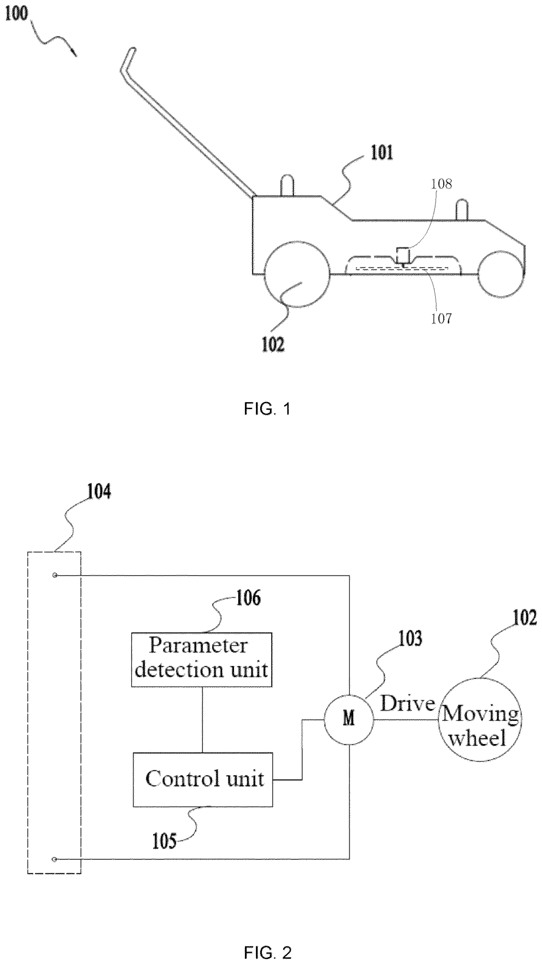

As shown in FIGS. 1 and 2, a walk-behind electric device 100 may be a hand-guided working machine. The walk-behind electric device 100 may include at least a device body 101, a moving wheel 102 connected to the device body 101, a moving motor 103 that drives the moving wheel 102, a power interface 104, and a control unit 105. The power interface 104 can be connected to a power supply so as to supply power to at least the moving motor 103. The control unit 105 can identify, according to device parameters of the walk-behind electric device 100, an auxiliary operation that the user wants to perform on the walk-behind electric device 100 and then output control information to control a rotational state of the moving motor 103. The moving motor 103 may be understood as the power assisted apparatus. Output parameters of the moving motor 103 in different rotational states may be the same or different. In an example, the moving motor 103 may be integrated in the moving wheel 102. For example, a hub motor integrated in the moving wheel 102 is used as the power assisted apparatus of the walk-behind electric device 100. The walk-behind electric device 100 further includes a functional assembly mounted the device body 101, and the functional assembly includes a functional accessory 107 and a functional motor 108 for driving the functional accessory 107.

In this example, the output parameters of the moving motor 103 may include parameters such as output torque, an output current, an output voltage, output power, a rotational speed, and acceleration.

In this example, the auxiliary operation desired by the user may at least be understood as an operation that the user wants to perform on the walk-behind electric device 100, where the user wants the walk-behind electric device 100 to generate a certain motion change. For example, the auxiliary operation may include at least the magnitude and the direction of the force applied by the user to the walk-behind electric device 100. Forces such as the force or an auxiliary force involved in the present application are all vectors including magnitudes and directions. In an example, the control unit 105 can control a moving speed and a moving direction of the walk-behind electric device 100 according to the identified auxiliary operation. Exemplarily, when the user wants to push the walk-behind electric device 100 to move forward quickly, the desired auxiliary operation may be a relatively large force in a forward direction. In some examples, the auxiliary operation desired by the user may also include a control operation performed for a purpose of stopping the walk-behind electric device 100 from moving. In an example, the auxiliary operation may also include gravity or a component of gravity applied by the user to the walk-behind electric device 100.

The control unit 105 may acquire or extract the device parameters of the walk-behind electric device 100, thereby identifying the auxiliary operation that the user wants to perform. For example, the control unit 105 may identify the auxiliary operation that the user wants to perform according to at least one of a moving parameter of the moving wheel 102, a working parameter of the moving motor 103, or an attitude parameter of the device body 101. The moving parameter may include parameters such as a moving speed and a steering angle of the moving wheel 102. The working parameter may include a rotational speed of the moving motor 103, a rotor position, a working current, a voltage, or reciprocals or integrals of the preceding parameters. The attitude parameter may include parameters such as an attitude angle of the device body 101 and an included angle of a plane where the device body 101 is located relative to a horizontal plane. After identifying the auxiliary operation of the user, the control unit 105 may control the output torque, the rotational speed, or the output power of the moving motor 102. In this example, the control unit 105 may be a hardware device with a control function, such as a microcontroller unit (MCU) or a central processing unit (CPU); and the control unit 105 may also be a non-physical software handler.

In this example, the preceding device parameters may be detected and obtained by a parameter detection unit 106 or the control unit 105. That is to say, the control unit 105 may be integrated with functions such as data detection, analysis processing, and control.

In this example, the auxiliary operation is at least partially positively correlated to at least one output parameter of the moving motor 103. That is to say, the auxiliary operation may be positively correlated to one or more output parameters over a certain period of time. Positive correlation may be understood as the following: in one vector direction, a change trend of one parameter changes with a change trend of another parameter, that is, one parameter becomes larger and another parameter also becomes larger, and vice versa.

In an example, the control unit 105 may identify the magnitude and the direction of the force applied by the user to the walk-behind electric device 100 according to the preceding device parameters and then control the output torque of the moving motor 103. That is to say, the control unit 105 may control the magnitude or the direction of the assistance of the power assisted apparatus according to the force.

In particular, the parameter detection unit 106 in this example does not include a strain gauge that can directly sense, through deformation, the force applied by the user and is also referred to as a pressure sensor. That is to say, no pressure sensor is provided in the walk-behind electric device 100. To control the assistance boost generated by the power assisted boosting apparatus according to the force applied by the user, the control unit 105 needs to estimate or calculate the force applied by the user according to at least one of the preceding device parameters and then change the output torque of the moving motor 103, that is, change the assistance of the power assisted apparatus.

In an example, the output torque of the moving motor 103 is positively correlated to the force applied by the user during a whole process of the user walking with the walk-behind electric device 100 by hand. The force is estimated by the control unit 105 according to the device parameters. Exemplarily, when the estimated force is relatively large, the output torque of the motor is also relatively large, and vice versa. Therefore, a better force balanced state can be achieved so that the user can acquire a more comfortable feeling of following. The force balanced state is explained in detail in the following examples and not described in detail here.

In an example, a power assisted working machine or a walk-behind working machine may include any tool that can be pushed or pulled to move, such as the lawn mower, the snow thrower, a trolley and other tool devices. A lawn mower that can be pushed or pulled by a user is used as an example for detailed description hereinafter.

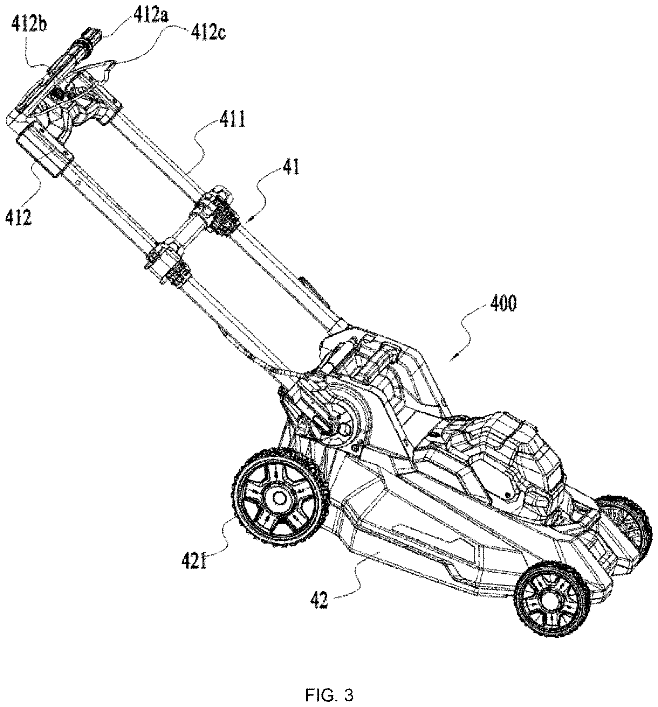

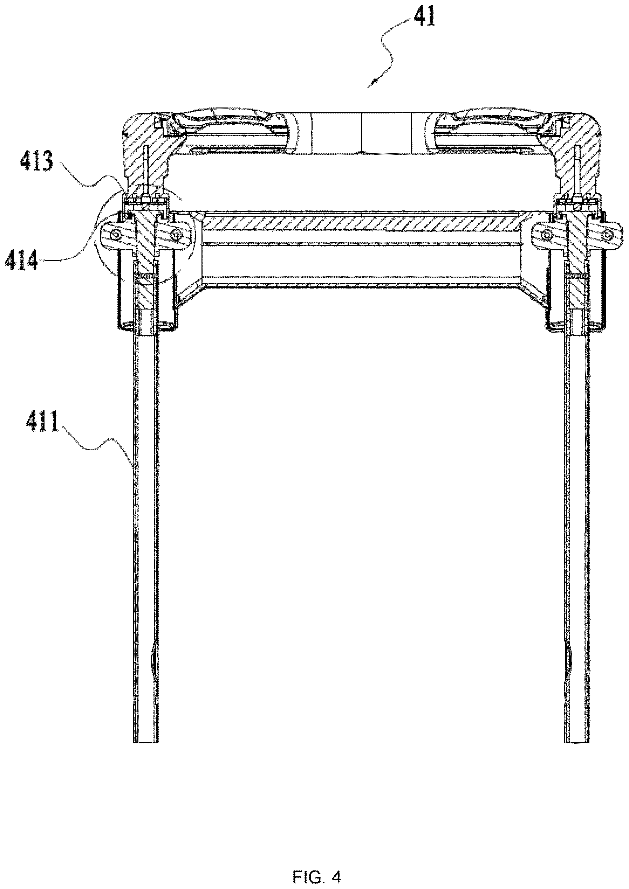

Referring to FIGS. 3 and 4, a lawn mower 400 mainly includes a handle device 41, a connecting rod 411, an operation piece 412, an operation switch 412a, a main body 42, and a moving assembly 421. The main body 42 includes the moving assembly 421 and a power mechanism. The handle device 41 includes the connecting rod 411 and the operation piece 412 that can be held. The operation piece 412 includes a grip for the user to hold and the operation switch 412a, the connecting rod 411 may be a hollow long rod structure, and the connecting rod 411 connects the operation piece 412 to the main body 42. The moving assembly 421 is mounted onto the main body 42 and can rotate around a rotation axis so that the entire lawn mower 400 can move on the ground. It is to be understood that the moving assembly 421 is moving wheels of the lawn mower 400.

To achieve a convenient operation of the user and an effort-saving effect, the lawn mower 400 in this example has a self-moving control function. The power mechanism can drive the moving assembly 421 to rotate so as to drive the lawn mower 400 to move on the ground, so that the user does not need to manually push the lawn mower 400 to move completely by a force of the user. Specifically, the power mechanism may be a moving motor 422 which can output a driving force for driving the moving assembly 421 to rotate. In some examples, the handle device 41 of the lawn mower 400 is further integrated with a power button 412b and a trigger 412c. Exemplarily, the power button 412b, the trigger 412c, and the operation switch 412a of the lawn mower 400 are all integrated on the operation piece 412. In addition, the operation switch 412a is not limited to a physical switch or a signal switch, and any device that can control a current in a circuit to be on or off is applicable. In fact, this type of operation switch 412a is not limited to current control and may also control the self-moving function to be enabled or disabled by mechanical means.

Generally, in a lawn mower of the prior art, as shown in FIG.4, to sense a thrust or a pulling force applied by the user to the handle device 41 to control a relevant parameter in a moving process of the lawn mower, such as a moving speed or output torque, a pressure sensor 413 and a trigger assembly 414 for triggering the pressure sensor 413 are generally provided in the handle device 41. The trigger assembly 414 can drive the pressure sensor 413 to deform. In this manner, when the user applies the thrust or the pulling force to the grip 415, the trigger assembly 414 applies a force to the pressure sensor 413, and the pressure sensor 413 is deformed and generates an electrical signal. The lawn mower 400 may further include a signal processing device and a control unit, where the electrical signal generated by the pressure sensor 414 is sent to the signal processing device, the signal processing device sends the processed signal to the control unit, and the control unit controls the lawn mower 400 to move on the ground. However, the electrical signal outputted by the pressure sensor 413 can be transmitted to the main body 42 only through a relatively long communication link; in addition, to accurately sense the force applied by the user, the accuracy of the pressure sensor 413 is required to be relatively high, and after used for a relatively long time, the pressure sensor 413 may have reduced sensitivity for sensing deformation. To sum up, the manner of using the pressure sensor 413 to sense the force applied by the user has a problem of unstable performance or reduced accuracy, affecting the comfort of the user following the lawn mower 400 and controlling the lawn mower 400 to work.

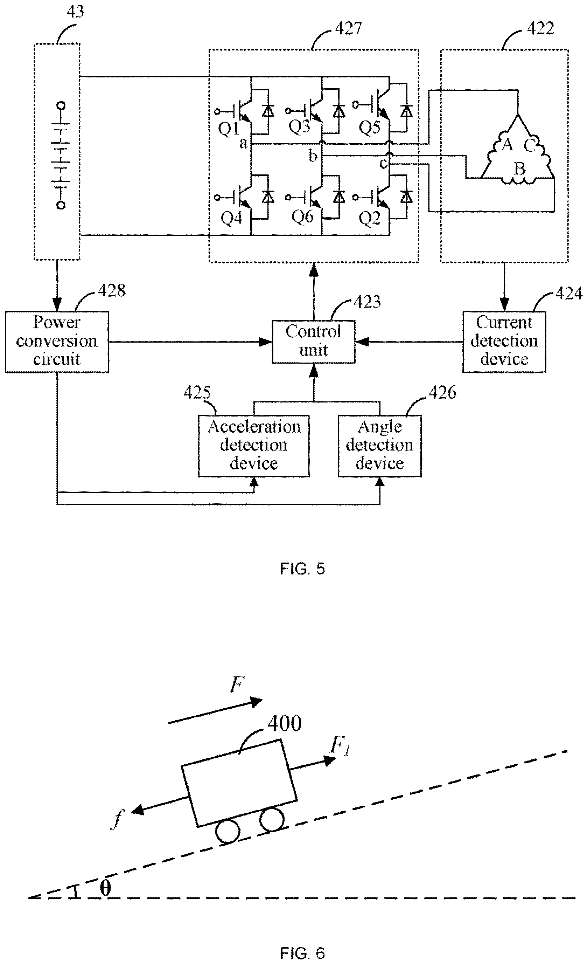

The present application discloses a walk-behind electric device that can accurately calculate the force applied by the user to the handle device 41 of the lawn mower 400 without the aid of the pressure sensor 413. In a specific example, as shown in the control logic diagram in FIG. 5, a control circuit of the main body 42 further includes a parameter detection unit that can acquire the relevant parameter in the moving process of the lawn mower. In an example, the relevant parameter acquired by the parameter detection unit includes at least an electrical parameter of the moving motor 422, such as a phase current or a phase voltage. In an example, the preceding relevant parameter includes at least a moving parameter of the lawn mower 400, such as moving acceleration. In this example, the preceding relevant parameter is not related to the force applied by the user to the handle device 41.

In an example, the parameter detection unit may include a current detection device 424, an acceleration detection device 425, and an angle detection device 426, and the control circuit further includes a power supply 43, a driver circuit 427, and a power conversion circuit 428.

The power supply 43 may be a battery pack or alternating current (AC) mains. Specifically, after converted by the power conversion circuit 428, a power supply voltage can power on the control unit 423, the acceleration detection device 425, and the angle detection device 426. Optionally, each of the control unit 423, the acceleration detection device 425, and the angle detection device 426 may correspond to one power conversion circuit.

The driver circuit 427 can be connected between the control unit 423 and the moving motor 422 and includes several semiconductor switching elements for switching an energized state of the moving motor 422. In an example, the driver circuit 427 is electrically connected to stator windings of phases of the moving motor 422 and used for transmitting a power supply current to the stator windings to drive the moving motor 422 to rotate. In an example, the moving motor 422 is a brushless motor. As an example, as shown in FIG. 5, the driver circuit 427 includes multiple switching elements Q1, Q2, Q3, Q4, Q5, and Q6. Each gate terminal of the switching elements is electrically connected to the control unit 423 and used for receiving a control signal from the control unit 423. Drains or sources of the switching elements are connected to the stator windings of the moving motor 422. The switching elements Q1 to Q6 receive control signals from the control unit 423 to change respective on states, thereby changing the current loaded on the stator windings of the moving motor 422 by the power supply 43. In an example, the switching elements Q1 to Q6 in the driver circuit 427 may be a three-phase bridge driver circuit including six controllable semiconductor power devices (such as field-effect transistors (FETs), bipolar junction transistors (BJTs), and insulated-gate bipolar transistors (IGBTs)) or any other types of solid-state switches (such as the IGBTs and the BJTs).

The current detection device 424 may be a sampling resistor disposed on a control board of the main body 42 and can collect a working current of the moving motor 422, that is, the phase current. Optionally, the current detection device 424 may be a device for inducing a motor current through a magnetic field. The acceleration detection device 425 is disposed in a housing of the lawn mower 400 or disposed on the handle device 41 or disposed on a moving wheel 421. To ensure the accuracy of acceleration data detection and avoid interference when data is transmitted to the control unit 423, the acceleration detection device 425 is generally disposed in a housing of the main body and relatively close to the control board of the main body, for example, on the moving wheel 421. The acceleration detection device 425 may be an acceleration sensor or any other detection device that can detect the acceleration of the lawn mower. The angle detection device 426 is used for detecting an included angle of a plane on which the lawn mower 400 moves relative to a horizontal plane, for example, an included angle θ shown in FIG. 6. The angle detection device 426 may be an attitude sensor or another detection device that can detect the angle θ. Similarly, to avoid interference to angle data transmitted to the control unit 423, the angle detection device 426 may be disposed at a position relatively close to the control board of the main body.

In this example, the control unit 423 may calculate output torque of the moving wheel 421 according to the phase current of the moving motor 422 detected by the current detection device 424 and a gear box speed ratio, calculate a friction of the lawn mower 400 relative to the ground according to the angle θ, and calculate the driving force of the lawn mower 400 according to the acceleration and then can calculate the force applied by the user to the handle device 41 according to the output torque, the friction and the driving force. Exemplarily, as shown in FIG. 6, assuming that the mass of the lawn mower 400 is m, the output torque of the moving wheel 421 is M, the driving force of the moving motor 422 is *F₁* under the output torque M, the included angle of the plane on which the lawn mower 400 moves relative to the horizontal plane is *θ*, a coefficient of friction of the lawn mower 400 relative to the plane on which the lawn mower 400 moves is *k_{f}*, and the acceleration of the lawn mower 400 moving on the plane on which the lawn mower 400 moves is a. According to the force analysis of the lawn mower, the force applied by the user to the handle device 41 is *F = ma* - *F₁* + *k_{f}* × *mg* × *cos θ* + *mg* × *sin θ.* The force *F* may include the thrust or the pulling force, and the g is a gravitational acceleration.

In this example, the force applied by the user to the handle device 41 can be calculated without the aid of the pressure sensor and simply through the parameters acquired by several commonly used detection devices disposed on the main body 42 and having stable performance, thereby avoiding interference to data and preventing the control performance of the whole machine from being affected while data collection accuracy is ensured and ensuring that the user can follow the lawn mower 400 more comfortably when the moving state of the lawn mower 400 is controlled based on the force applied by the user.

In an example, the control unit 423 may control a rotational speed of the moving motor 422 according to the thrust of the user such that the moving speed of the lawn mower 400 is consistent with the speed of the user following the lawn mower 400 so that the user follows in a more comfortable state and feels less pulled or hindered.

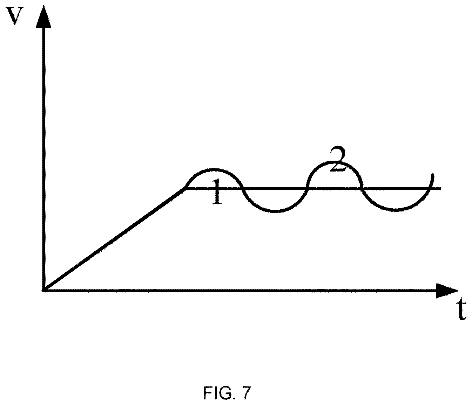

In a speed regulation process, it is generally expected to obtain a stable moving speed under an ideal condition shown by line 1 in FIG. 7. However, the acquisition of the moving speed is related to the integration time, for example, the moving speed *v* = ∫*p dt,* where *p* denotes a parameter related to the force applied by the user. That is to say, the moving speed v is related to not only the force applied by the user but also the time. Therefore, when the moving speed of the lawn mower is adjusted based on the force applied by the user, a response in the moving speed has a certain lag. Thus, the moving speed fluctuates significantly as shown by line 2 in FIG. 7 in a later stage of adjustment, that is, a speed lag increases when the force applied by the user is large, and the speed lag decreases when the force applied by the user is small. Therefore, the user may feel pulled or hindered due to the fluctuation of the moving speed of the lawn mower, and the comfort of the user during mowing is relatively poor.

In an example, to further improve the comfort of a control state, the lawn mower 400 can also adaptively adjust the output torque of the moving motor 422 according to the thrust or the pulling force of the user such that the driving force of the motor 422 under the output torque can reach a desired value. It is to be understood that different thrusts or pulling forces correspond to different desired driving forces, the driving force of the lawn mower 400 increases when the force applied by the user is relatively large, and the driving force of the lawn mower 400 decreases when the force applied by the user is relatively small. The driving force of the moving motor 422 is directly adjusted to adaptively change with the force of the user. Since the rotational speed of the moving motor 422 is not directly adjusted, the lag problem of rotational speed adjustment caused by time integration is avoided, and a real-time, efficient, smooth and non-blocking adaptive control process of the driving force of the moving motor 422 is achieved so that the user follows in a more comfortable state. Following in a comfortable state means that the user does not feel pulled or hindered when pushing the lawn mower 400 to work. It is to be noted that when the user follows in a better state, the driving force of the moving motor 422 under current output torque, the force applied by the user, and resistance of the lawn mower 400 in motion can reach a force balanced state within an allowable error range. In the force balanced state, a magnitude of the driving force is positively correlated to a magnitude of the force applied by the user. The force applied by the user to the handle device and calculated by the control unit 423 is *F*, the control unit 423 adjusts the output torque of the moving motor according to *F*, the driving force of the moving motor 422 is *F₁* under the output torque, and the resistance of the lawn mower 400 in motion is *F₂*. When *F* + *F₁ -F₂ = Fᵣ = ma,* the preceding three forces are in the force balanced state, where *Fᵣ* denotes a resultant force received by the lawn mower, *m* denotes the mass of the lawn mower, and a denotes the moving acceleration of the lawn mower. It is to be understood that, assuming that the force *F* applied by the user increases, to avoid the user's uncomfortable feeling of strenuous operation due to the application of a relatively large force, the lawn mower 400 increases its own driving force *F₁* according to the force *F* so that the increased driving force *F₁* can overcome the resistance so as to control the lawn mower 400 to continue moving. That is to say, the force balanced state refers to a state in which the force applied by the user is relatively small and the driving force *F₁* just overcomes the resistance *F₂* to drive the lawn mower 400 to move.

In an example, to prevent the output torque of the moving motor 422 from being frequently changed and the performance of the lawn mower 400 from being affected, the control unit may determine, according to the magnitude of the force applied by the user to the handle device 41, whether the output torque of the moving motor 422 needs to be changed. That is to say, when the change of the force applied by the user is relatively small, it means that the user operates by hand with no apparent change felt, and the driving force of the moving motor 422 does not need to be changed. However, when a variation of the thrust or the pulling force is greater than or equal to a variation threshold, that is, when the force applied by the user suddenly increases or decreases, the control unit 423 controls the output torque of the moving motor 422 according to the calculated thrust or pulling force so that the driving force of the moving motor 422 under the output torque, the force applied by the user, and the resistance of the lawn mower 400 in motion reach a force balance within an allowable error range.

It is to be understood that in the traditional control manner of adjusting a speed through a switch, when the user toggles a speed regulation switch to a fixed position, the lawn mower 400 moves at a fixed speed. In this case, due to different loads of the lawn mower 400 and different moving speeds of the user, the moving motor 422 may not work in an appropriate current range, resulting in the waste of power. In the present application, magnitudes of a working current may be given according to magnitudes of the force of the user under different working conditions, so as to control the output torque of the moving motor 422 and avoid energy waste caused by working at a fixed working current under a fixed moving speed.

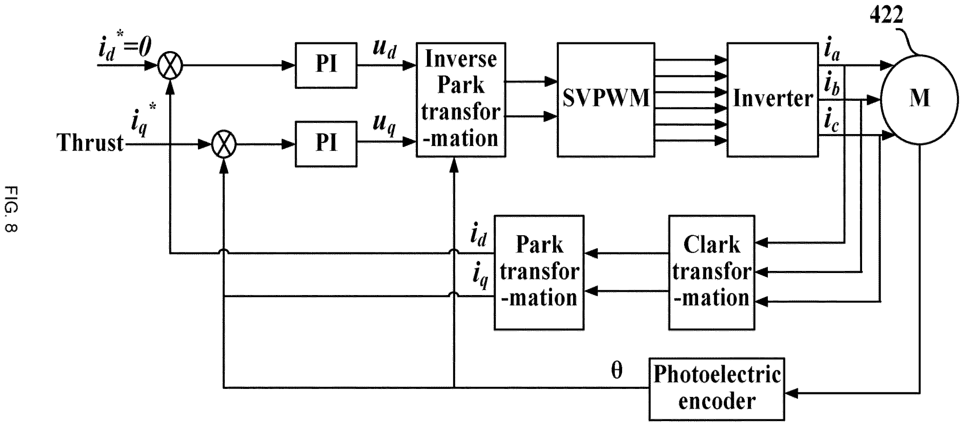

In an example, the control unit 423 may calculate the corresponding current value according to the calculated magnitude of the thrust and then control the output torque of the moving motor 422 in conjunction with the current value detected by the current detection device so that the driving force of the moving motor 422 can overcome the resistance, allowing the user to perform comfortable following and control with a smaller thrust. As shown in FIG. 8, a current signal corresponding to the force applied by the user may be decomposed into a quadrature-axis current signal *i_{q}** that affects the output torque of the moving motor 422 and a direct-axis current signal *i_{d}** that affects a magnetic potential of the moving motor 422. In a specific example, *i_{d}** is set to zero, and *i_{q}** is inputted to a field-oriented control (FOC) current loop control circuit as a set current value to act together with the phase current *i_{q}* fed back by the moving motor 422 to control the output torque of the moving motor 422. Three-phase currents *iₐ*, *i_{b}* and *i_{c}* fed back by the moving motor 422 in the FOC current loop control circuit are subjected to Clark transformation and Park transformation, so as to obtain the actual quadrature-axis current *i_{q}* that can reflect the torque of the moving motor 422 and the actual direct-axis current *i_{d}* that can reflect the magnetic potential of the moving motor 422. Since the FOC current loop control circuit is a very mature moving motor control manner, details are not described here.

In this example, the direct-axis current signal *i_{d}** outputted by the signal processing device is set to zero, and only *i_{q}** is used as a control electrical signal affecting the output torque of the motor, so as to control the output torque of the motor by the current. It is to be understood that the current signal is positively correlated to the output torque of the moving motor, and the current signal is positively correlated to a force signal reflecting a thrust value or a pulling force value. That is to say, the greater the force applied by the user, the greater the current, and the greater the output torque of the moving motor; and vice versa.

In the present application, the motion control of the lawn mower 400 is achieved by directly using FOC current loop control, simplifying the control manner, reducing the amount of calculation, and improving the response speed and the mowing efficiency of the machine; at the same time, compared with the manner of controlling the rotational speed of the moving motor, the manner of directly controlling the output torque of the moving motor brings a better feeling of actual operation by hand and makes the adjustment process smoother.

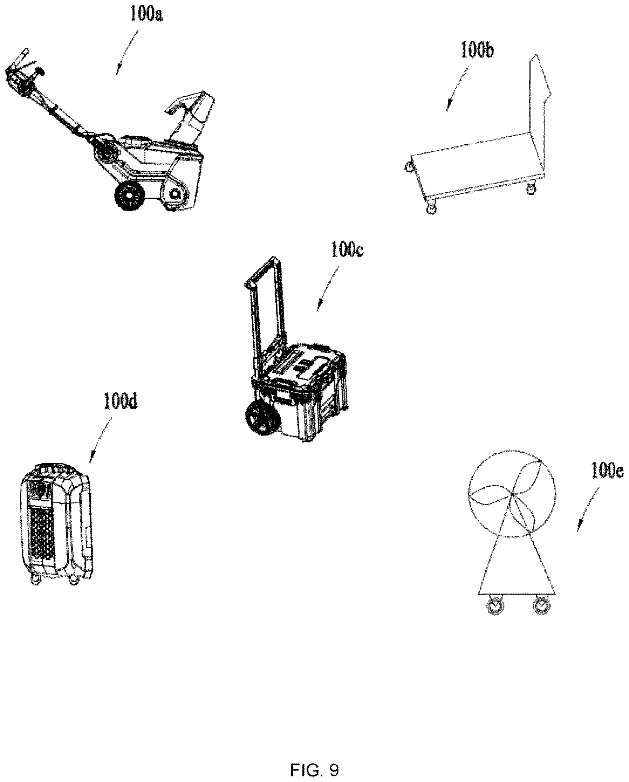

In an example, in addition to the walk-behind lawn mower 400 in the preceding examples, any walk-behind electric device or hand-guided working machine may include other different types of tool devices, for example, the snow thrower, a power assisted wheeled device such as a wheeled multifunctional tool, a power assisted farm device, a wheeled tool bracket, a riding tool device, and an all-terrain vehicle. A snow thrower 100a, an item transport device 100b, a tool storage device 100c, a wheeled power supply device 100d, and a wheeled wind power apparatus 100e that are shown in FIG. 9 are further included. The item transport device may be a hand-pushing/pulling power assisted cart or forklift. The tool storage device may be a tool storage box and can store different power tools. The wheeled tool bracket may be a bracket for supporting a table-type power tool or a bracket for supporting photovoltaic equipment. The wheeled power supply device may be a large battery pack or a mobile power supply or an adapter or an inverter with wheels. The wheeled wind power apparatus may be a blower or fan with wheels. The power assisted farm device may be a hand-pushing/pulling planter and fertilizer truck. The wheeled multifunctional tool may be a device with wheels that can be pushed or pulled and can be attached with various functional accessories. The riding tool device may reserve a certain amount of power when the power is relatively low or the operation cannot be performed due to other faults, so as to assist the device to move to a destination, such as a charging station. The all-terrain vehicle may be a utility vehicle (UTV) or an all-terrain vehicle (ATV).

For the item transport device 100b, the item transport device 100b may include an item placement section connected to the device body and configured to consign goods.

For the tool storage device 100c, the tool storage device 100c may include a box body formed with a storage space for storing at least one type of tool device, a connection rod fixed on the box body and including at least a grip for a user to hold.

For the wheeled tool bracket, the wheeled tool bracket may include a bracket body formed with a support portion configured to support a tool device and a moving wheel connected to the bracket body.

For the wheeled power supply device 100d, the wheeled power supply device 100d may include a power supply body configured to output power and a moving wheel configured to support the power supply body.

For the wheeled wind power apparatus 100e, the wheeled wind power apparatus 100e may include an apparatus body including at least a fan and a moving wheel mounted on the apparatus body.

For the wheeled multifunctional tool, the wheeled multifunctional tool may include a tool body and a power portion. The tool body includes an accessory mount configured to mount different functional accessories. The power portion is disposed on the tool body or the different functional accessories and includes a power motor for driving the different functional accessories.

For the power assisted farm device, the power assisted farm device may include a device body, a handle device connected to the device body, and an operation performing assembly mounted onto the device body and used for performing an agricultural operation.

## Claims

1. A walk-behind hand-guided working machine (100, 400, 100a, 100b, 100c, 100d), comprising:
a device body (101, 42);
a moving wheel (102, 421) connected to the device body (101, 42);
a moving motor (103, 422) configured to drive the moving wheel (102, 421);
a functional assembly mounted on the device body and comprising at least a functional accessory (107) and a functional motor (108) for driving the functional accessory (107);
a power interface (104) connected to a power supply so as to supply power to the moving motor (103, 422);
a control unit (105, 423) configured to identify,
according to device parameters of the walk-behind hand-guided working machine (100, 400, 100a, 100b, 100c, 100d), an auxiliary operation that a user wants to perform on the walk-behind hand-guided working machine (100, 400, 100a, 100b, 100c, 100d),
wherein the auxiliary operation is at least partially positively correlated to at least one output parameter of the moving motor (103, 422);
a parameter detection unit (106) configured to detect the device parameters of the walk-behind hand-guided working machine (100, 400, 100a, 100b, 100c, 100d),
**characterized in that** $
the device parameters comprise at least one of a moving parameter of the moving wheel (102, 421) and a working parameter of the moving motor (103, 422).

2. The walk-behind working machine (100, 400, 100a, 100b, 100c, 100d) of claim 1, wherein the power interface (104) is configured to be detachably connected to a power supply device.

3. The walk-behind working machine (100, 400, 100a, 100b, 100c, 100d) of claim 1, wherein the power interface (104) is configured to be connected to a battery pack capable of supplying power to a power tool.

4. The walk-behind working machine (100, 400, 100a, 100b, 100c, 100d) of claim 1, wherein the at least one output parameter comprises at least output torque of the moving motor (103, 422).

## Patentansprüche

1. Handgeführte Arbeitsmaschine (100, 400, 100a, 100b, 100c, 100d), umfassend:
einen Gerätekörper (101, 42);
ein bewegliches Rad (102, 421), das mit dem Gerätekörper (101, 42) verbunden ist;
einen Fahrmotor (103, 422), der zum Antrieb des beweglichen Rades (102, 421) ausgelegt ist;
eine Funktionsbaugruppe, die auf dem Gerätekörper montiert ist und mindestens ein Funktionszubehör (107) und einen Funktionsmotor (108) zum Antrieb des Funktionszubehörs (107) umfasst;
eine Stromversorgungsschnittstelle (104), die mit einer Stromquelle verbunden ist, um den Fahrmotor (103, 422) mit Strom zu versorgen;
eine Steuereinheit (105, 423), die so konfiguriert ist, dass sie in Abhängigkeit von Geräteparametern der handgeführten Arbeitsmaschine (100, 400, 100a, 100b, 100c, 100d) einen Hilfsbetrieb erkennt, den ein Benutzer an der handgeführten Arbeitsmaschine (100, 400, 100a, 100b, 100c, 100d) ausführen möchte,
wobei der Hilfsbetrieb zumindest teilweise positiv mit mindestens einem Ausgangsparameter des Fahrmotors (103, 422) korreliert ist;
eine Parametererfassungseinheit (106), die zum Erfassen der Geräteparameter der handgeführten Arbeitsmaschine (100, 400, 100a, 100b, 100c, 100d) konfiguriert ist,
**dadurch gekennzeichnet, dass**
die Geräteparameter mindestens einen Bewegungsparameter des beweglichen Rades (102, 421) und einen Arbeitsparameter des Fahrmotors (103, 422) umfassen.

2. Handgeführte Arbeitsmaschine (100, 400, 100a, 100b, 100c, 100d) nach Anspruch 1,
wobei die Stromversorgungsschnittstelle (104) so konfiguriert ist, dass sie abnehmbar mit einer Stromversorgungseinrichtung verbunden werden kann.

3. Handgeführte Arbeitsmaschine (100, 400, 100a, 100b, 100c, 100d) nach Anspruch 1,
wobei die Stromversorgungsschnittstelle (104) so konfiguriert ist, dass sie mit einem Batteriesatz verbunden werden kann, der in der Lage ist, ein Elektrowerkzeug mit Strom zu versorgen.

4. Handgeführte Arbeitsmaschine (100, 400, 100a, 100b, 100c, 100d) nach Anspruch 1,
wobei der mindestens eine Ausgangsparameter zumindest das Ausgangsdrehmoment des Fahrmotors (103, 422) umfasst.

## Revendications

1. Machine de travail accompagnée guidée à la main (100, 400, 100a, 100b, 100c, 100d), comprenant :
un corps de dispositif (101, 42) ;
une roue de déplacement (102, 421) reliée au corps de dispositif (101, 42) ;
un moteur de déplacement (103, 422) configuré pour entraîner la roue de déplacement (102, 421) ;
un ensemble fonctionnel monté sur le corps de dispositif et comprenant au moins un accessoire fonctionnel (107) et un moteur fonctionnel (108) destiné à entraîner l'accessoire fonctionnel (107) ;
une interface électrique (104) connectée à une alimentation électrique de manière à fournir de l'énergie au moteur de déplacement (103, 422) ;
une unité de commande (105, 423) configurée pour identifier, en fonction de paramètres de dispositif de la machine de travail accompagnée guidée à la main (100, 400, 100a, 100b, 100c, 100d), une opération auxiliaire qu'un utilisateur souhaite exécuter sur la machine de travail accompagnée guidée à la main (100, 400, 100a, 100b, 100c, 100d),
dans laquelle l'opération auxiliaire est au moins partiellement correlée positivement à au moins un paramètre de sortie du moteur de déplacement (103, 422) ;
une unité de détection de paramètres (106) configurée pour détecter les paramètres de dispositif de la machine de travail accompagnée guidée à la main (100, 400, 100a, 100b, 100c, 100d),
**caractérisée en ce que**
les paramètres de dispositif comprennent l'un au moins parmi un paramètre de déplacement de la roue de déplacement (102, 421) et un paramètre de travail du moteur de déplacement (103, 422).

2. Machine de travail accompagnée (100, 400, 100a, 100b, 100c, 100d) selon la revendication 1,
dans laquelle l'interface électrique (104) est configurée pour être connectée de façon détachable à un dispositif d'alimentation électrique.

3. Machine de travail accompagnée (100, 400, 100a, 100b, 100c, 100d) selon la revendication 1,
dans laquelle l'interface électrique (104) est configurée pour être connectée à un bloc de batterie capable d'alimenter un outil électrique en énergie.

4. Machine de travail accompagnée (100, 400, 100a, 100b, 100c, 100d) selon la revendication 1,
dans laquelle l'au moins un paramètre de sortie comprend au moins un couple de sortie du moteur de déplacement (103, 422).
